# EUROPEAN PATENT SPECIFICATION

(11) **EP 1 747 328 B1**
(45) Date of publication and mention of the grant of the patent: **15.06.2011**
(21) Application number: 05734920.1
(22) Date of filing: 29.04.2005
(51) Int. Cl.: E04B 1/24, E04B 1/58

(54) **A WALL FRAMING SYSTEM**
WANDRAHMENSYSTEM
SYSTEME DE STRUCTURE MURALE

(30) Priority: 29.04.2004 IE 20040299; 14.07.2004 IE 20040473
(43) Date of publication of application: 31.01.2007
(73) Proprietor: Kingspan Holdings (IRL) Limited, Kingscourt, County Cavan (IE)
(72) Inventor: STEVENS, Mark, Victor, Pickering YO18 7HT (GB); WILKINSON, Aidan John, Scarborough, North Yorkshire YO12 4DZ (GB)
(74) Representative: O'Brien, John Augustine
(86) International application number: PCT/IE2005/000050
(87) International publication number: WO 2005/106146

(56) References cited:
- CH-A5- 618 758
- DE-U1- 9 211 636
- US-A- 1 988 388
- US-A- 2 307 126
- US-A- 3 680 271
- US-A- 4 080 768
- US-A- 6 094 872

## Description

The invention relates to a framing system comprising a number of roll formed metal elements jointed together. Such a framing system may be used to provide a wall such as a partition wall of a building such as a modular building.

Many framing systems of this type are known. There is however a need for an improved system which will be easy to assemble whilst restricting tolerances and thereby ensuring greater accuracy in overall dimensions.

US 4,080,768 describes a frame element of the type described in the pre-characterising portion of claims 1 to 29.

US 1,988,388 and US 6,094,872 describe support elements of the type described in the pre-characterising portion of claim 30.

DE 9211636 U describes a support assembly of the type described in the pre-characterising portion of claim 44.

### Statement of Invention

According to the invention there is provide a framing system according to appended claim 1.

The invention also provides a frame element according to appended claim 26.

In one embodiment the locators of the male and female connectors are arranged such that the fame elements to be connected are correctly oriented with respect to one another when engaged.

In another embodiment the locators of the male and female connectors are configured to substantially prevent rotation of the adjacent elements when engaged.

In a further embodiment the locators are equispaced from the associated fixing region.

In one embodiment the male and female connectors each comprise four locators which are equispaced around the fixing region on radii extending from the fixing region.

In another embodiment the locators of the male connector are formed in the frame elements by shearing or drawing through.

In a further embodiment each of the locators of the male connector comprises a protuberance.

In one embodiment the protuberance comprises an elongate form.

In another embodiment the protuberance comprises a ridge form.

In a further embodiment the protuberance comprises a substantially u-shaped cross section.

In one embodiment the protuberance comprises a substantially v-shaped cross section.

In another embodiment the protuberance comprises front and back lateral faces defining the locking members.

In a further embodiment the front and back lateral faces comprises a shear edge.

In one embodiment the lateral faces protrude substantially at right angles to the frame element.

In another embodiment the ridge extends in a substantially radial direction relative to the fixing region.

In a further embodiment the ridge extends in a generally circumferential direction relative to the fixing region.

In one embodiment the female lock receivers comprise through holes.

In another embodiment the through holes comprise a generally cylindrical internal wall extending through the frame element substantially at right angles for receiving the male locking members.

In a further embodiment the frame element comprises a generally channel form comprising a base web and first and second side flanges.

In one embodiment the side flanges comprise an inturned lip at the upper edge thereof to define a generally c-shaped form.

In another embodiment a portion of the inturned lip is removed to define a slot for receiving a portion of an adjacent frame element.

In a further embodiment the frame element comprises an inturned lip except at the male connector portion thereof.

In one embodiment the frame element comprises a swage at a portion thereof.

In another embodiment the frame element comprises a swage at the female connector portion thereof.

In a further embodiment the male connector comprises a raised guide concentric with the fixing region.

In one embodiment wherein the female connector comprises a recessed guide concentric with the fixing region.

In another embodiment the fixing region comprises a fixing hole.

In a further embodiment the fixing region comprises a pilot hole.

In one embodiment the fixing region comprises a clearance hole.

A frame element of the invention may comprise one or more male connectors, or one or more female connectors. Alternatively in another embodiment a frame element comprises at least one male and at least one female connector.

According to another aspect the invention provides a support element for a frarning system comprising an upper support and legs depending from the support, and a fixing member extending outwardly from one of the legs for fixing the support element to a support structure.

In one embodiment the fixing member is configured to enable the insertion of fixing pins therethrough to anchor the element to the support structure.

In another embodiment the fixing member comprises a plurality of preformed fixing holes to receive fixing pins.

In a further embodiment the fixing member is continuous.

In one embodiment the fixing member is formed integrally with the support element.

In another embodiment the fixing member is arranged substantially at right angles to the leg.

In a further embodiment the support defines a receiver configured to receive and support a structural member.

In one embodiment the legs are configured to space the support apart from the support structure.

In another embodiment one of the legs comprises a plurality of spaced-apart screed entry holes.

In a further embodiment the screed entry holes comprise through holes.

In one embodiment the screed entry holes comprise a semicircular form.

In another embodiment the support element comprises a stabilising member extending inwardly from one of the legs.

In a further embodiment the stabilising member is arranged substantially at right angles to the leg.

In one embodiment the stabilising member extends between the two legs.

In another embodiment the stabilising member is configured to stabilise the support element.

In a further embodiment the stabilising member is continuous.

In one embodiment the stabilising member is formed integrally with the support element.

According to a further aspect the invention provides a second support element for mounting a framing system to a support structure comprises an upper connector and a lower connector,
the upper and lower connectors having a substantially L- shaped form and comprising a web and a flange,
the web of the upper connector being configured for connection to a support structure,
the web of the lower connector being configured for connection to a structural member to be mounted, and
the flanges of the upper and lower connectors being configured for connection to each other.

In one embodiment the web of the upper connector comprises a plurality of fixing holes spaced apart to enable connection to a support structure.

In another embodiment the flange of the upper connector comprises a plurality of spaced-apart slots.

In a further embodiment wherein the slots are vertically oriented.

In one embodiment the slots are configured to enable deflection of a support structure without placing a load on a structural member to be mounted.

In another embodiment the webs of the upper and lower connectors are continuous.

In a further embodiment the flanges of the upper and lower connectors are continuous.

According to a further aspect the invention provides a modular building system comprising a framing system of the invention.

According to another aspect the invention provides a modular building system comprising a first or second support element of the invention for mounting the framing system of the invention to a support structure.

According to a further aspect the invention provides a modular building system comprising mounting means for mounting the framing system invention to form a partition wall and wherein the mounting means comprises a first support element of the invention for mounting to an underlying support structure and a second support element of the invention for mounting to an upper support structure.

### Brief Description of the Drawings

The invention will be more clearly understood from the following description thereof given by way of example only, in which:
Fig. 1 is a perspective view of an assembled frame according to the invention;

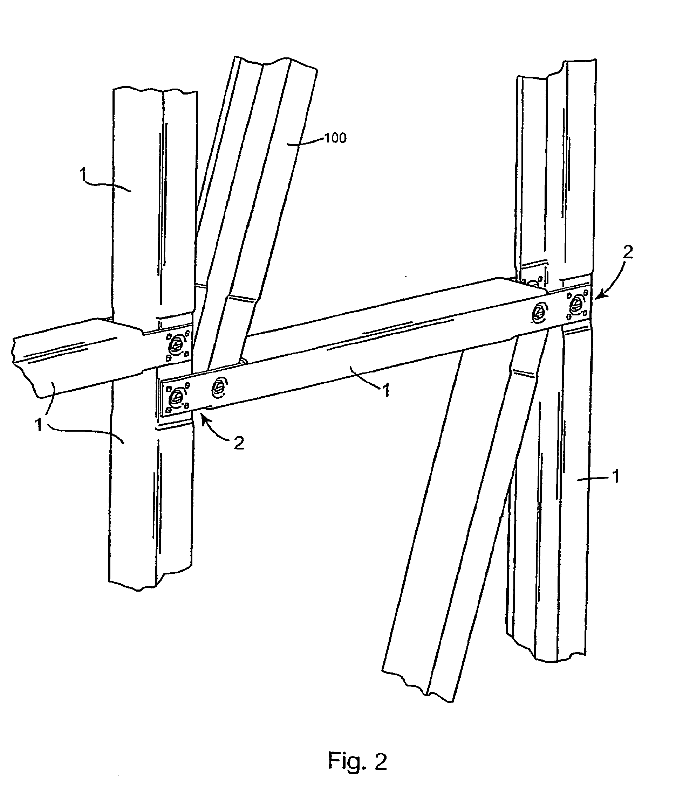

Fig. 2 is a perspective view of a joint detail of the frame;

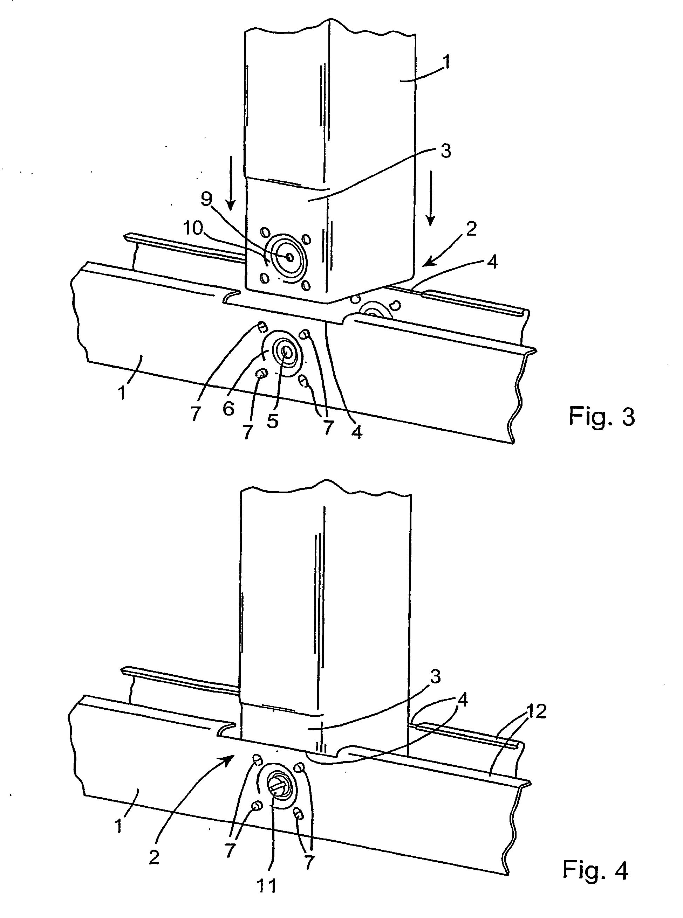

Fig. 3 is a perspective view of another joint detail of the frame;
Fig. 4 is an exploded view of the joint detail of Fig. 3;

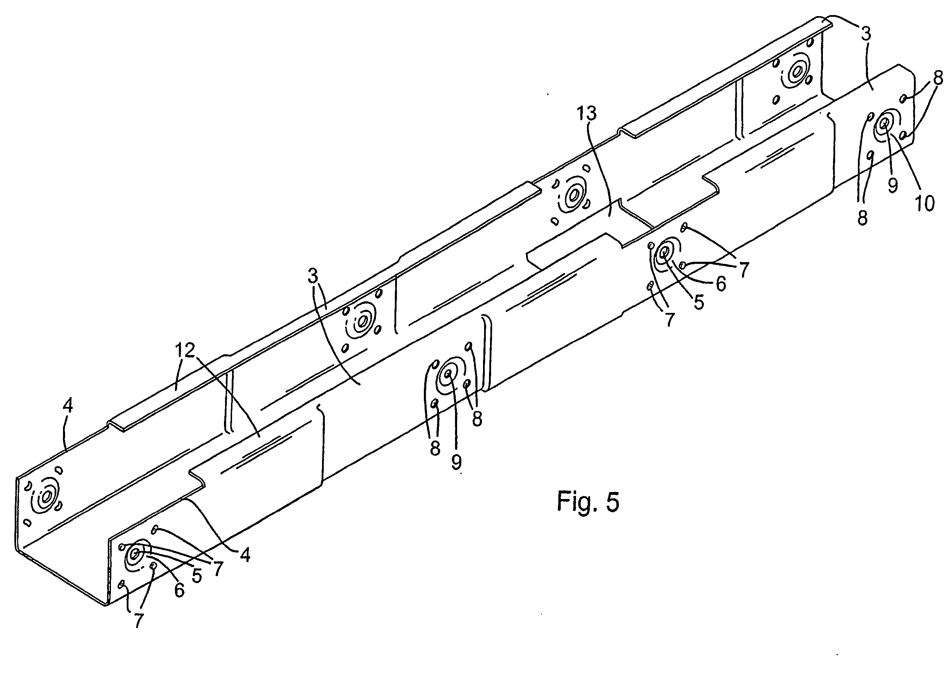

Fig. 5 is a perspective view of one frame element of the invention;

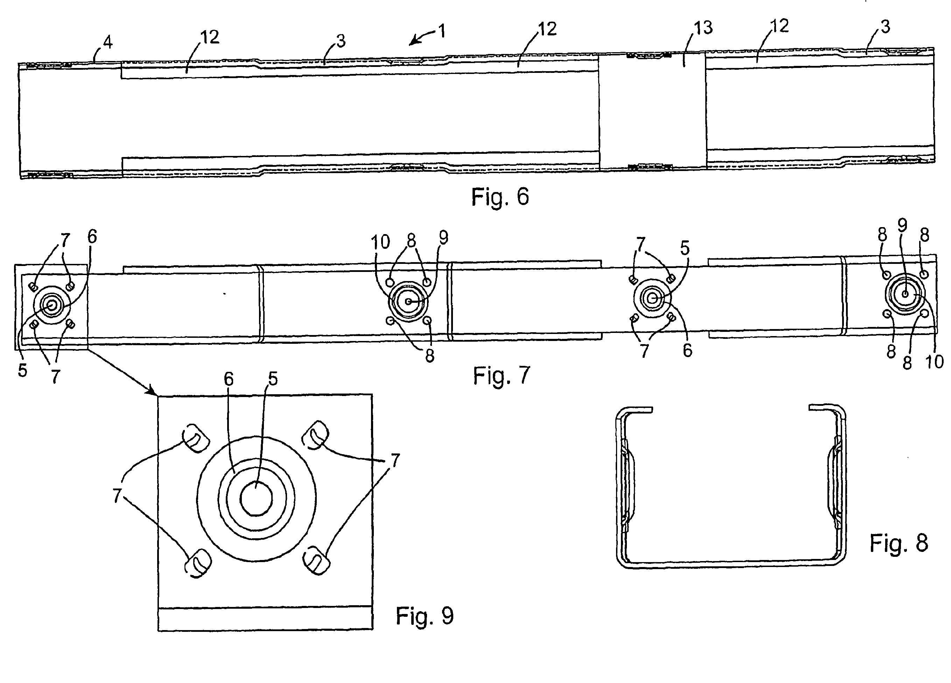

Fig. 6 is a plan view of the frame element of Fig. 5;
Fig. 7 is an elevational view of the frame element of Fig. 5;
Fig. 8 is an end view of the frame element of Fig. 5;
Fig. 9 is an enlarged view of detail A (see Fig. 7) of the frame element;
Fig. 10 is a plan view of an alternative frame element with a rail connector at one (left hand) end and a male end track connector at an opposite end;
Figs. 11 and 12 are elevational views of the frame element of Fig. 10 with different arrangement of end chamfers;

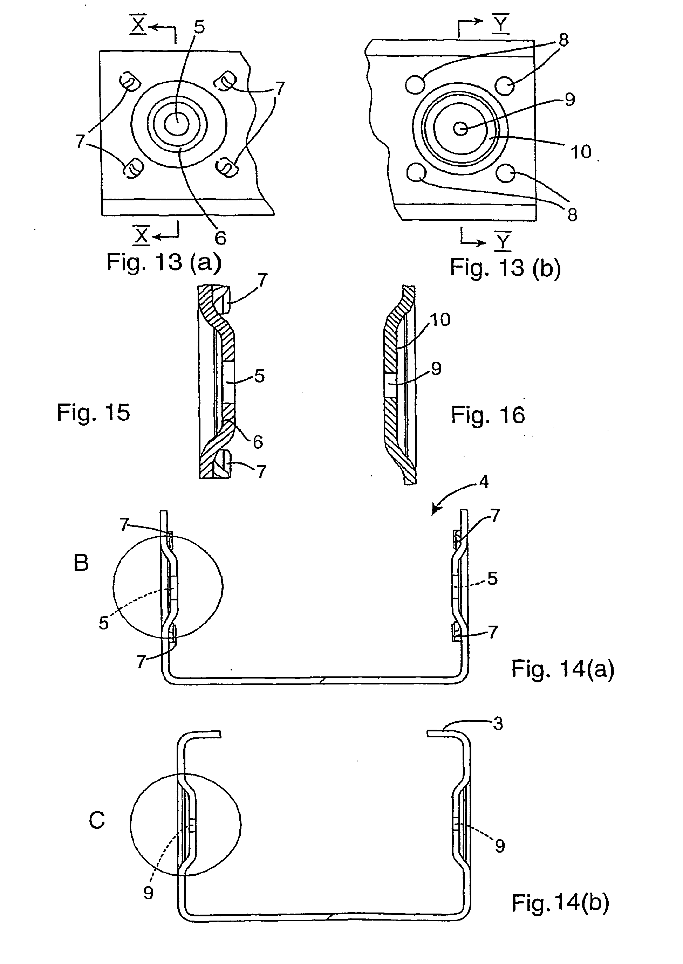

Figs. 13(a) and 13(b) are elevational views of end portions of another frame element of the invention;
Figs. 14(a) and 14(b) are cross sectional views on the lines X-X and Y-Y in Fig. 13(a) and 13(b);
Fig. 15 is a cross sectional view of detail B in Fig. 14(a);
Fig. 16 is a cross sectional view of detail C in Fig. 14(b);
Fig. 17 is an elevational view of end portions of another frame element;
Fig. 18 is a cross sectional view on the line II- II in Fig. 20;
Fig. 19 is a detailed view of the detail D of Fig. 18;
Fig. 20 is a detailed view of an alternative locator of the invention;
Fig. 21 is a cross sectional view of a joint interconnecting frame elements;
Figs. 22 is a perspective view of one element of the joint of Fig. 21;
Fig. 23 is a perspective view of another element of the joint of Fig. 21;
Figs. 24 and 25 are detailed perspective views from above and below the element;
Fig. 26 is a partially cut away perspective view of the joint of Fig. 21;
Figs. 27 and 28 are perspective views of a frame of the invention mounted to form a partition wall;
Figs. 29 and 30 are perspective and cross-sectional views respectively of the detail L of Fig. 28;
Figs. 31 and 32 are perspective views of a base support element of the invention;
Figs. 33 and 34 are perspective views of an alternative base support element of the invention;
Figs. 35, 36 and 37 are plan views from above the front and below the base support element of Figs. 33 and 34;

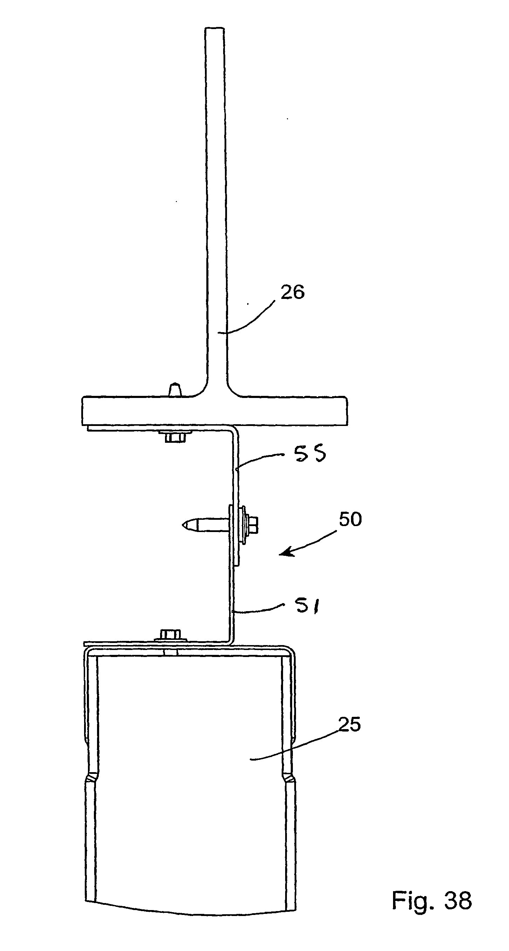

Fig. 38 is a cross sectional view of detail M of Fig. 28;

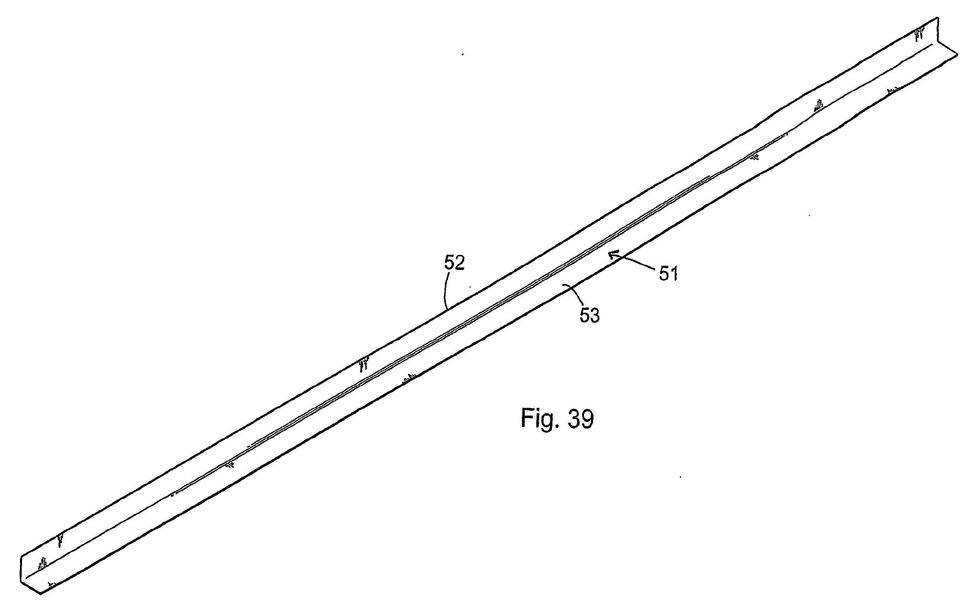

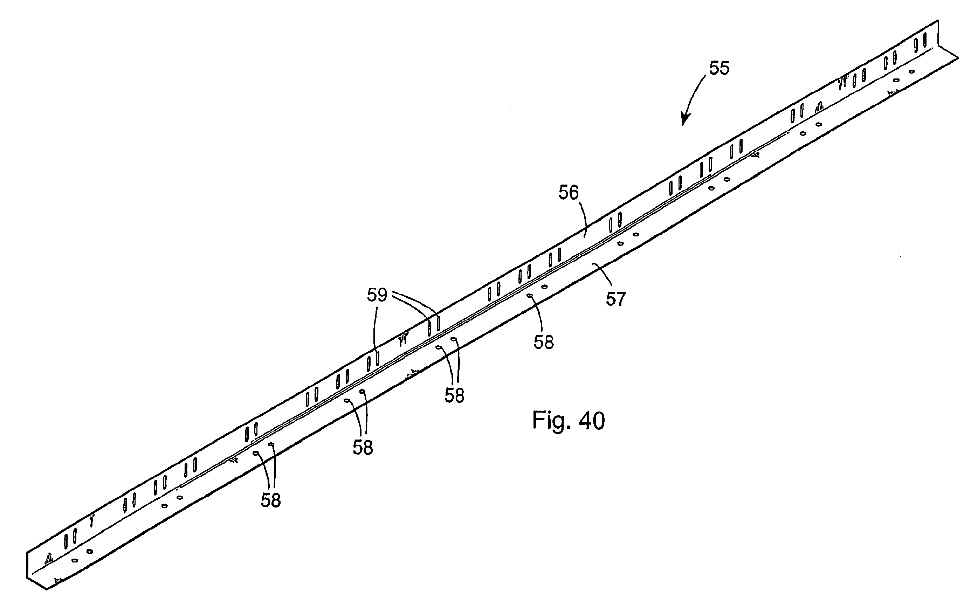

Figs. 39 and 40 are perspective views of the lower and upper components of the upper support element of Fig. 38;

### Detailed Description

Referring to the drawings there is illustrated a framing system 10 comprising a number of frame elements 1 typically of metal, in this case steel sections, connected at joints 2.

The frame element 1 comprises an elongated generally c-shaped lipped channel having a web, and side flanges which extend continuously the length of the element. Each element 1 comprises at least one connector portion comprising a male connector 4 or a female connector 3. Each joint 2 comprises the interconnection of a male connector 4 with a female connector 3 of an adjacent element 1. The element 1 comprises a lip 12 which extends inwardly at the top of the side flanges.

The male connector 4 comprises oppositely arranged on each of the side flanges of the element 1, a fixing region 5 in this case comprising a fixing hole, a raised guide 6 and at least two locators spaced apart around the fixing hole and guide. The raised guide 6 is concentric with the fixing hole 5. The locators are equispaced around the fixing hole on radii extending from the fixing hole. The locators comprise male protuberances 7 protruding inwardly on the counterform/inside of the element 1. The raised guide 6 also protrudes inwardly on the inside of the element 1. The protuberances 7 comprise locking members 15 for locking engagement with the female connector 3 of an adjacent element 1.

The female connector 3 comprises oppositely arranged on each of the side flanges of the element 1, a fixing region 9 in this case comprising a fixing hole, a recessed guide 10 and at least two locators equispaced around the fixing hole and guide. The recessed guide 10 protrudes inwardly on the inside of the element 1. The locators comprise female receiving holes 8 for receiving the male protuberances 7 in locking engagement.

There are at least two locators and in this case four locators 7, 8 associated with the fixing regions 5 and 9 of the male and female connectors 4 and 3.

The male and female connectors 4 and 3 are configured for interconnection with corresponding connectors of adjacent frame elements. In the embodiments shown a female connector portion 3 is inserted inside a male connector portion 4 and the connectors are inter-engaged and fixed.

As shown in the drawings, in this case the element 1 has a swaged form at the female connector portion 3 to enable it to be inserted inside an adjacent element 1 at a male connector portion 4. The frame element is swaged at more than 1 and no more than 4 times the thickness of the material of the element. The provision of the swage allows for tolerance between the elements. The lip 12 is omitted at the male connector portion 4 to enable insertion of the female connector portion 3 into close abutting engagement with the male connector.

The element 1 may comprise at the male connector portion 4 an open base portion 13. This is to enable the adjacent element to be inserted through the first element for interconnection at particular orientation. This is suitable in applications where lateral restraint is required.

In the embodiment illustrated the female connector 3 is located inside the male connector 4 to form a joint 2. The guides 6 and 10 of the male and female connectors have complementary forms which assist the user in alignment of the fixing regions 5 and 9. That is the guide 6 of the male connector is raised relative to the recessed guide 10 of the female connector. The raised guide 6 is received in the recessed guide 10 as the connectors 4 and 3 are moved into together for interconnection.

The complementary forms of the guides 6 and 10 provide for an initial locating of the connectors 4 and 3 with alignment of their respective fixing holes 6 and 10, which by virtue of their form also provide for the user to rotate the connectors of the adjacent frame elements 1 relative to each other to enable engagement of the locators 7 and 8 so as to secure the adjacent frame elements I at the required orientation relative to each other.

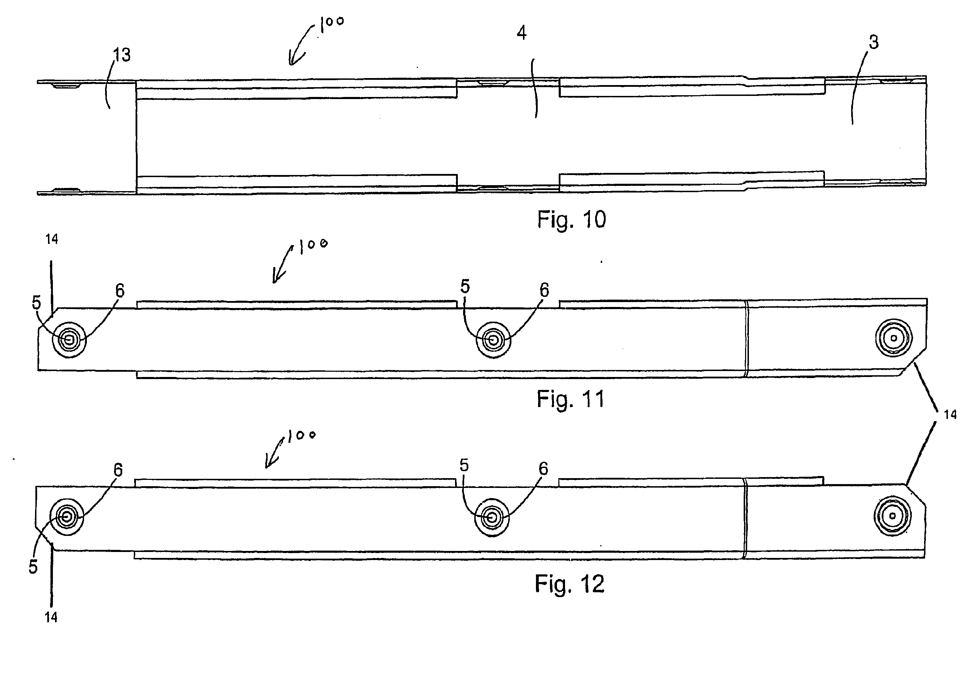

As shown in the drawings rail frame elements 100 may also be connected to the frame elements. Referring to Figs. 10 to 12 the rail frame element 100 is shown in further detail. The elements 100 comprise chamfered ends 14. The rail frame elements 100 are used in applications where a non-perpendicular connection is required.

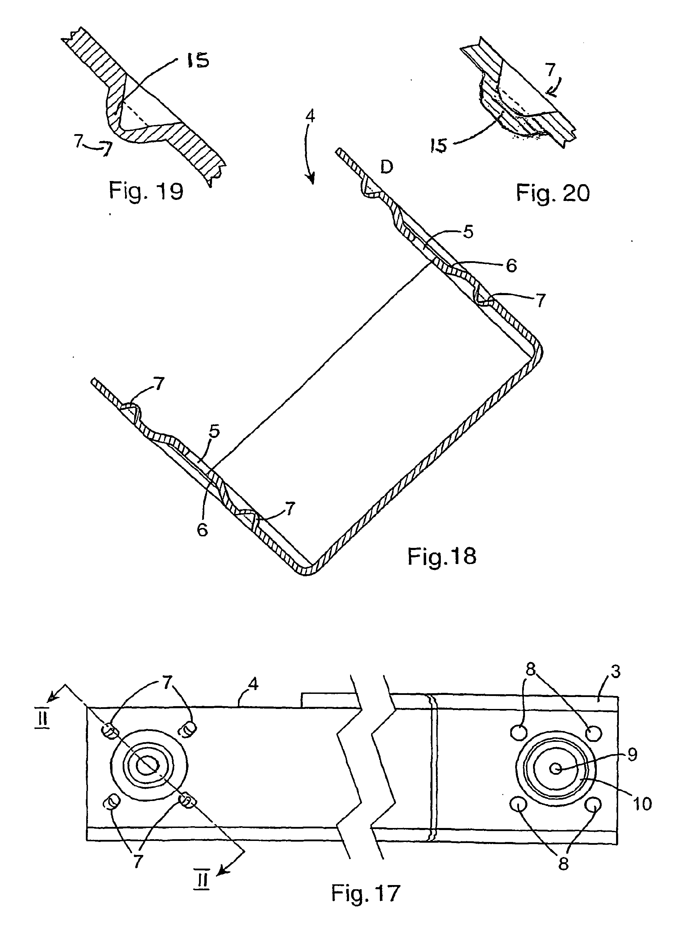

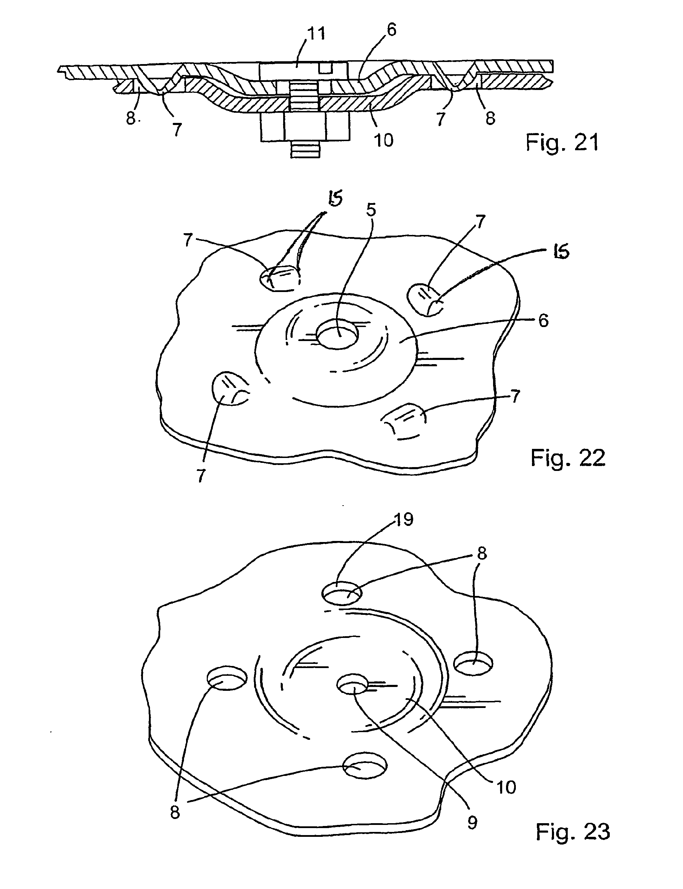

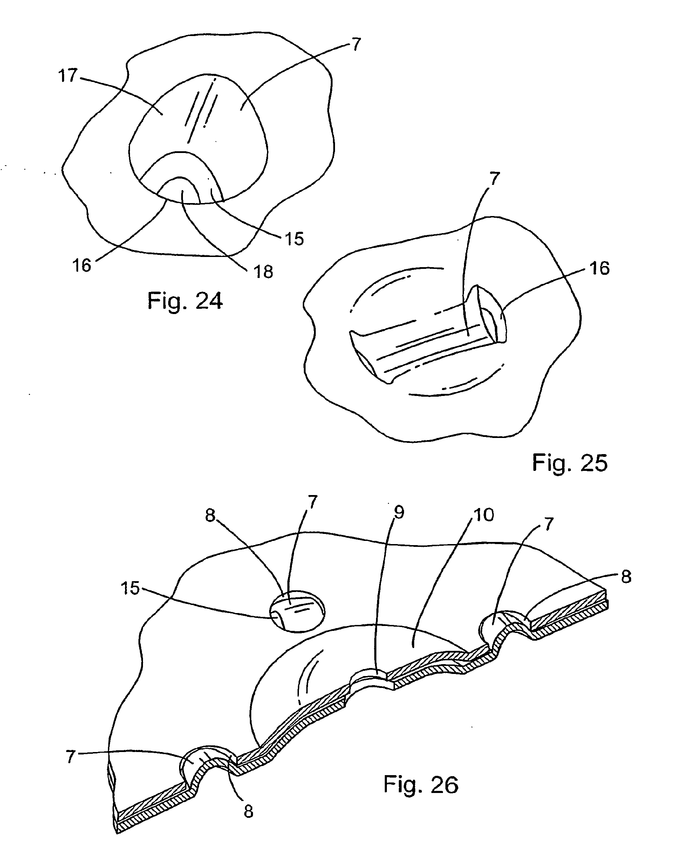

Preferred forms of the locators and connectors of the fame elements 1 are described with reference to the drawings and in particular Figs. 17 to 26.

The locking members 15 of the male protuberances 7 engage with the female receiver holes 8 to prevent rotation of the frame members relative to each other once the male and female locators are engaged.

The protuberances 7 are formed by partially shearing through/ drawing through the element 1. The protuberances 7 comprise an elongated ridge 17 having shear edges at both ends. The shear edges define the locking members 15 for locking engagement with the internal wall 19 of the female receiving holes 8. The shear edges 15 are arranged substantially at right angles to the frame element.

The protuberances 7 may have a substantially V-shaped lateral cross-section or alternatively a substantially U-shaped lateral cross-section as shown in Figs. 19 and 20 (in the detailed drawings the form of the protuberances is exaggerated for clarity).

In the embodiments illustrated the height of the protuberance 7 is equal to or less than the depth of the receiving hole so that the top of the protuberance 7 does not protrude out through the receiving hole 8 on engagement.

The male protuberances 7 have by virtue of the manner in which they are formed a thickness substantially the same as the thickness of the material of the frame element. The internal wall 19 has a generally cylindrical form and extends through the thickness of the frame element. The internal wall 19 extends substantially at right angles to the frame element.

The locking engagement of the male and female locators is thus particularly secure since it is provided by a positive engagement through substantially the full thickness of the elements.

The shear edges 15 at both ends of the ridge 17 are positively and securely engaged with the female receiving holes 8 and by their form are substantially prevented from rotating in the hole 8. As a result, the adjacent frame elements are securely locked and any rotational movement substantially prevented once the male protuberances 7 are engaged in the female receivers 8.

In one embodiment the elongated ridges extend radially relative to the fixing hole 5, in this case all of the ridges of the locators are substantially in aligned in the same direction. Alternatively the ridges may be arranged so that all points on the ridges are of similar distance from the fixing hole 5, the ridges having an approximately circumferential orientation relative to the fixing hole. The ridges are not rounded in form to follow a circumferential line. In this case the ridges of the locators on opposite sides of the fixing hole run parallel to each other. The arrangement of the plural locators and receivers spaced apart around the fixing region provides for a highly secure connection of adjacent frame elements.

When the connectors 4 and 3 are oriented as required and their respective locators 7 and 8 engaged, the joint is secured by inserting a fixing member 11 through the aligned fixing holes 5 and 9 and tightening it. The fixing member 11 may be of the nut and bolt type illustrated. The fixing member 11 is selected so that the head of the fixing is accommodated in the guide 6 on the outside of the element. When the fixing member is inserted and tightened the protuberances 7 are clamped into the holes 8 ensuring a very secure connection between the frame elements.

As noted above the frame elements may comprise fixing regions 5 and 9 which have a form other than a fixing hole. In the case that one or both of the holes are omitted a self piercing rivet may be used to connect the frame elements through the corresponding fixing regions. Alternatively either or both the male and female fixing regions 5 and/or 9 may comprise a pilot hole in which case pop rivets used to connect the frame elements together. In a further arrangement the fixing region 5 and/or 9 may comprising fixing holes sized for use with a staked fixing. In a still further arrangement either of the fixing region 5 and/or 9 may comprise a clearance hole for use with a self tapping screw. Clearly any suitable combination of the above may be used.

The male and female connection3, 4 and locators 7, 8 are configured to ensure that there is no tolerance at the connection between adjacent frame elements. Therefore the frame system of connected frame elements has a high dimensional accuracy. When assembled, the joint 2 made at the connectors ensures that loosening is resisted by, for example, a wind load because there is no relative movement between adjacent frame elements at the joint. In construction of a frame joint all frame elements are held exactly at the correct orientation relative to one another, thus in effect providing a self jigging joint connection.

The differing profiles of the male and female locators are particularly important in ensuring a good connection between the frame elements. The connection at the joint has the advantages of being particularly secure.

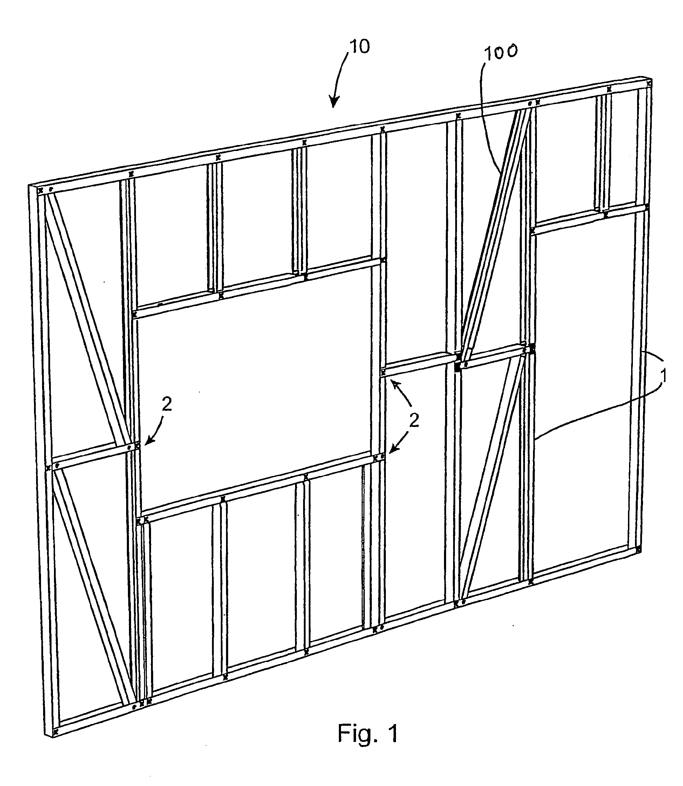

It will be appreciated that the system may be used to join adjacent frame elements in any application such as a wall type frame 10 as illustrated in Fig. 1 to which cladding panels may be attached. Such a wall may be load bearing or non load bearing and may, for example, form part of a modular building unit.

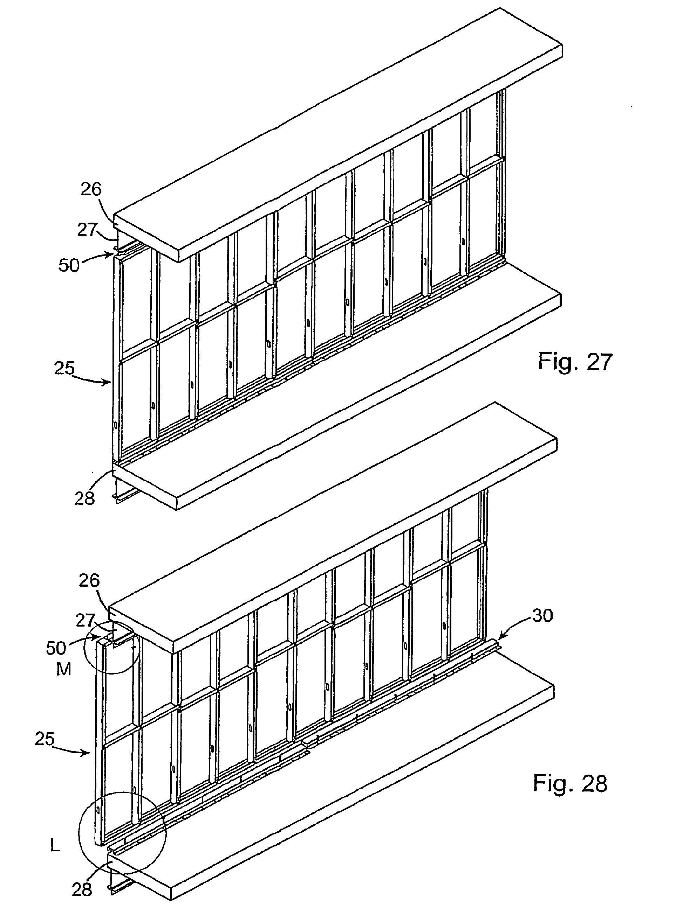

Referring to Figs. 27 and 28, a frame 25 comprised of interconnected frame elements 1 is mounted between an upper support structure 26, 27 and an underlying support structure 28. The frame 25 forms a partition wall which extends from the floor 28 to the ceiling 27.

The frame 25 is mounted to the underlying support structure 28 by means of a base support element 30 and to the upper support structure 26, 27 by means of an upper support element 50.

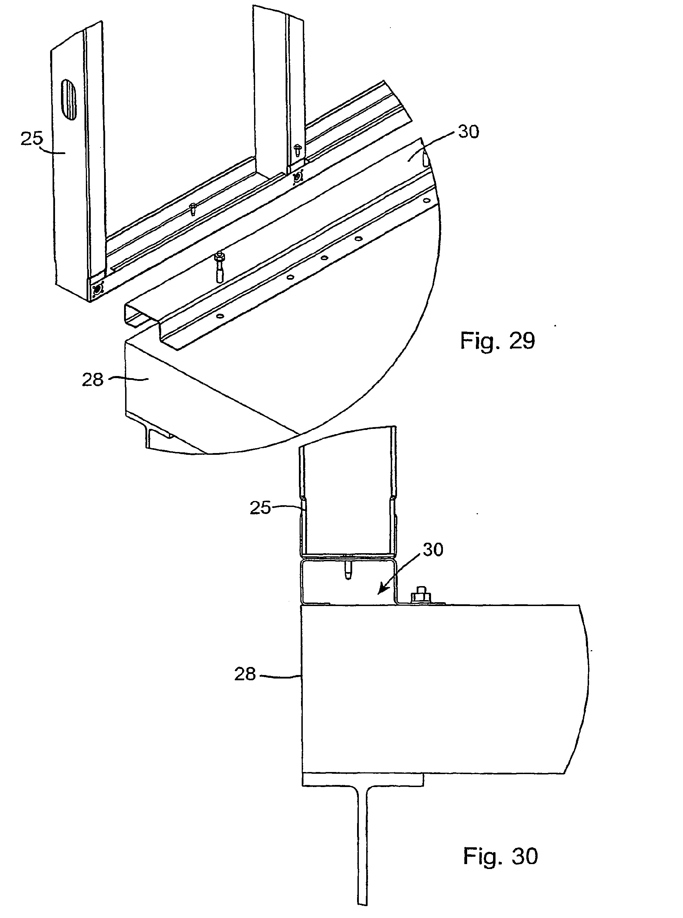

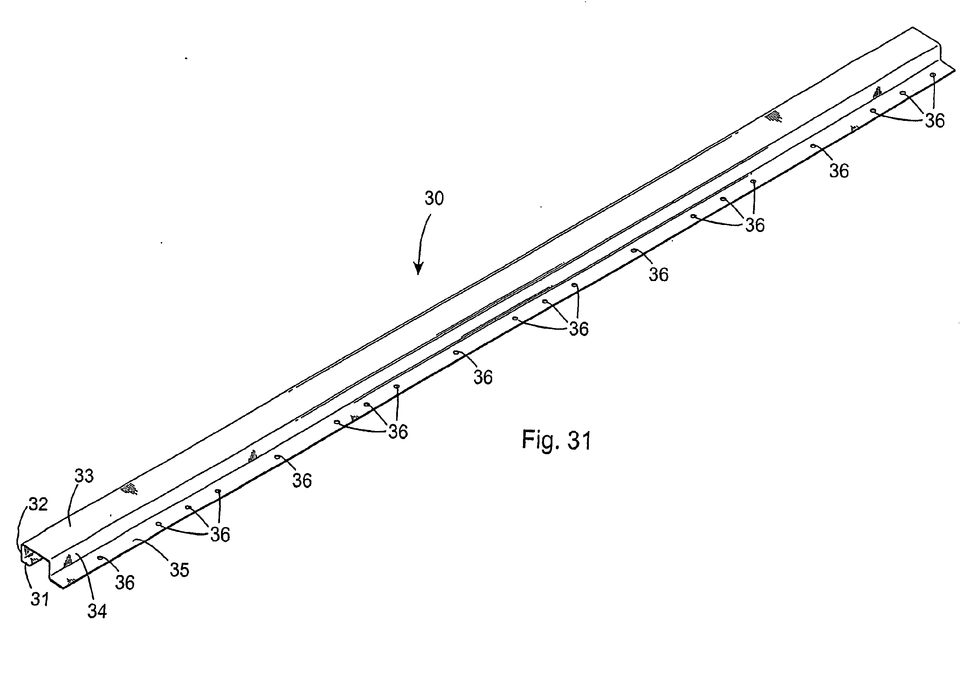

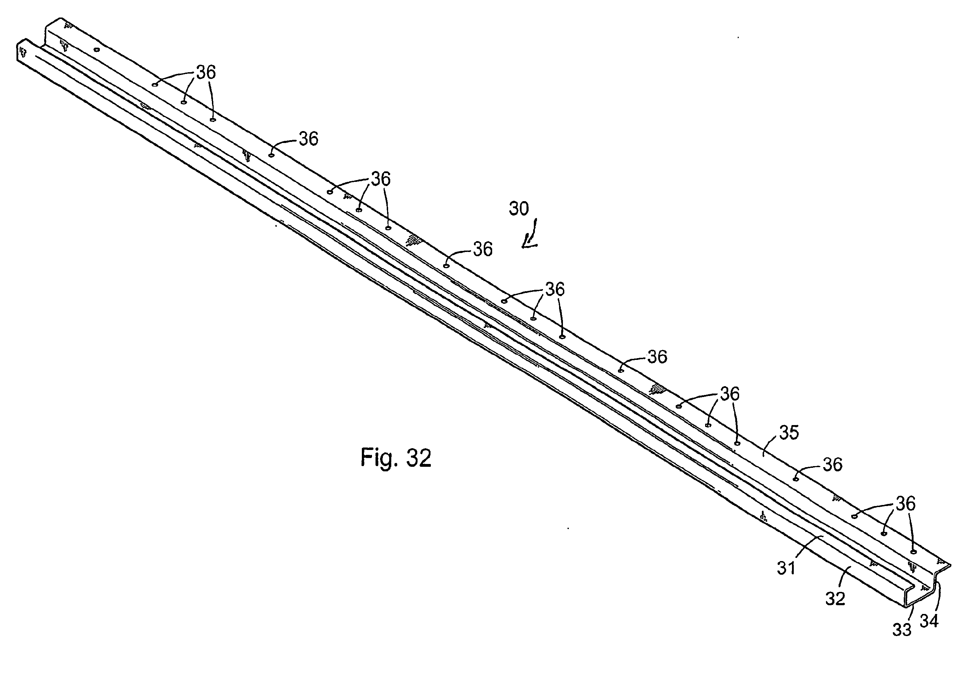

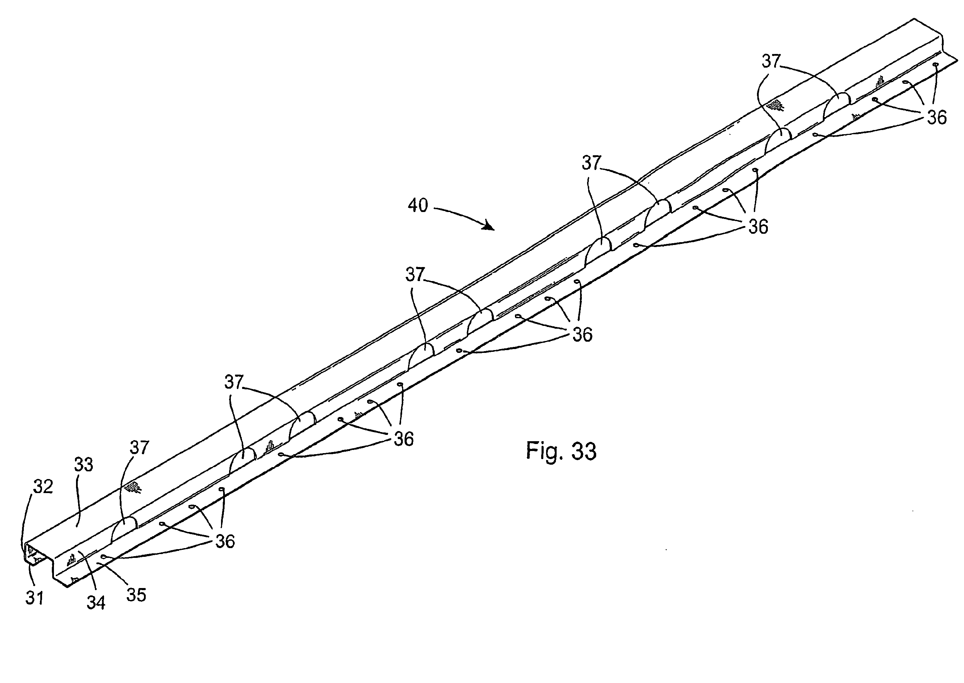

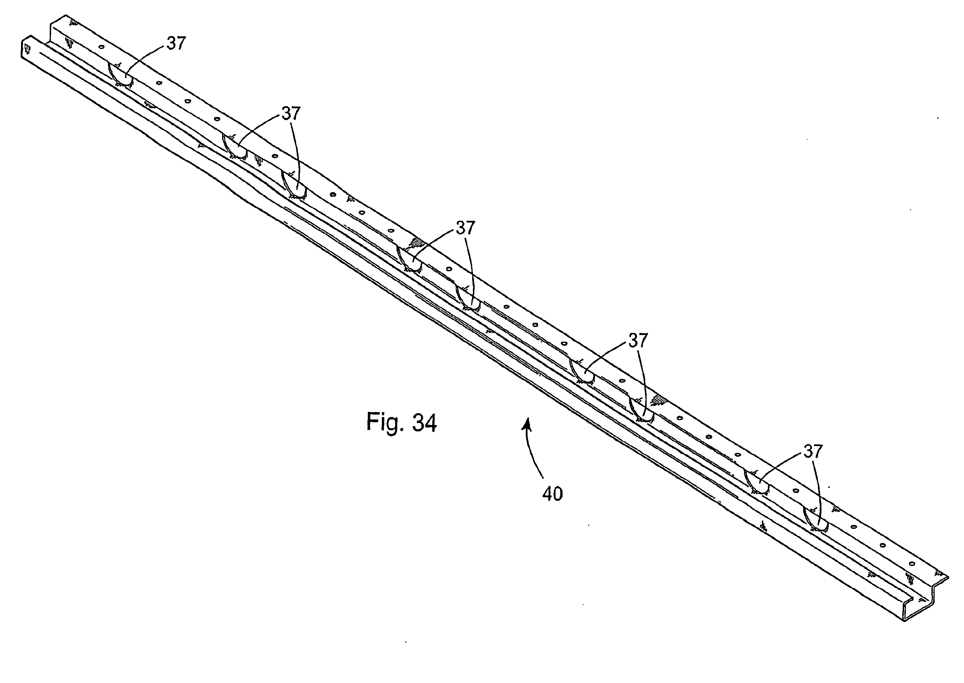

Referring to Figs. 29 to 37, the base support element 30 has an elongate form comprising front and back legs 32 and 34 depending from a top support 33, and a protruding fixing member 35. The protruding fixing member 35 extends outwardly from the base of the front leg 34. The base support element 30 may further comprise a stabilising member 31 extending inwardly from the base of the back leg 32. The stabilising member 31 serves to provide support and reinforcement for the base support element and the frame 25. The fixing member 35 and stabilising member 31 are continuous and integrally formed with the support element. The fixing and stabilising members extend substantially at right angles to the front and back legs respectively.

The fixing member 35 includes a plurality of fixing holes 36. The base support element is anchored securely to the underlying supporting structure 28 by means of inserting fixing means through the fixing holes 36.

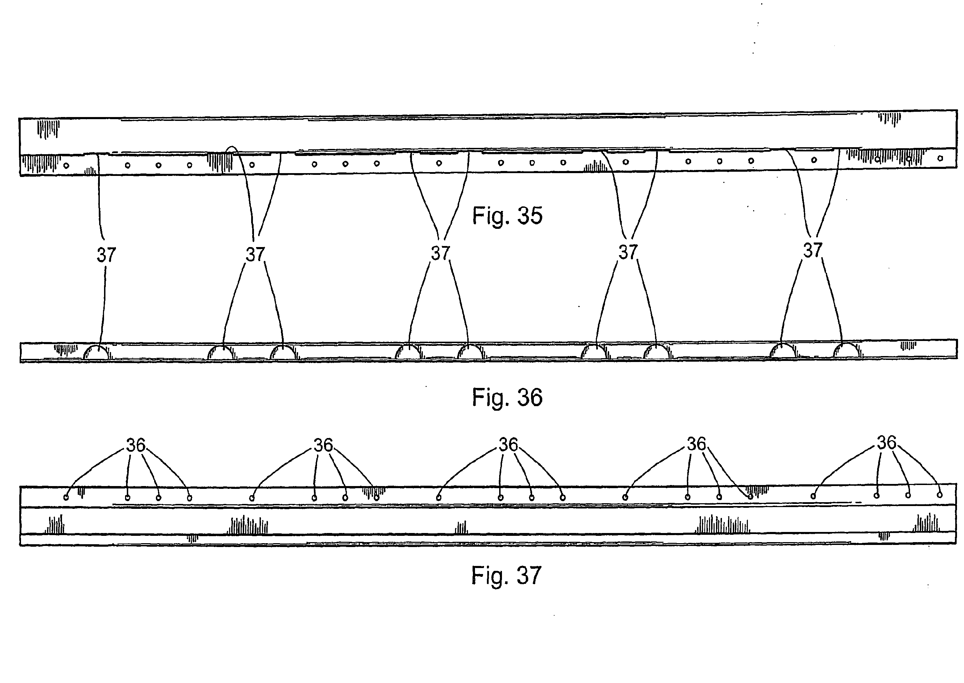

Referring to Fig. 37 a base support element 40 is described. The base support element 40 is similar to the element 30 and like features have been identified by similar reference numerals. The front leg 34 further comprises a plurality of holes 37. The holes 37 are sheared through or punched through holes provided in the facing wall 34 adjacent to the fixing member 35. The holes 37 have a generally semicircular form. These are to allow the screed to enter the base support element 40. This provides for an improved seal between the base support element and the supporting structure and is particularly important in applications where acoustic performance is of importance.

In use the back leg 32 of the support element is positioned near to the outer edge of the support structure 28 for example a floor slab. The stabilising member 31 which extends inwardly from the back leg 32 provides support and reinforcement for the base support element 30, 40 and also takes account of any tolerance in the support structure, for example the edge of the floor slab may not be entirely straight. Fixing means are inserted through the fixing holes 36 to secure the base support element 30, 40 to the supporting structure 28.

When the base support element 30, 40 is securely fixed to the underlying support structure, the frame 25 is then mounted to it by inserting plurality of self-tapping or self-drilling screws through the frame member 25 into the top support 22 thereof.

While in the embodiments described the fixing and stabilising members are continuous it will be appreciated that they may comprise a suitable alternative form. Also while in the embodiments described the fixing member and inner support are integrally formed with the support element is will be appreciated that either may be formed separately for connection thereto.

The invention also provides an upper support element 50 for connecting the top of the frame 25 to an upper support structure 26, 27. The upper support element 50 comprises two connectors namely a first upper connector 55 and a second lower connector 51.

In the embodiment illustrated the upper and lower connectors 55 and 51 have similar forms. Both comprise a substantially L-shaped form comprising a web and a side flange.

The upper connector 55 comprises a web 7 and a flange 6. The web 7 is configured for connection to the supporting structure 26, 27. The flange 6 depends from the web 7 and is configured for connection to the lower connector 51. The flange 6 comprises a plurality of slots 59. The slots 59 have an elongate form and are vertically oriented. The web 7 comprises a plurality of fixing holes 58 for fixing to the support structure 26 which may be of metal.

The slots 59 are configured to allow for downward deflection of the support structure 26, 27 without placing a structural load on the frame.

The lower connector 51 similarly comprises a web 3 and an upstanding flange 2. The web and flange are substantially flat and planar. The flange 2 is configured for connection to the flange 6 of the upper connector. The web 3 is configured for connection to the top of the frame to be mounted.

The upper and lower components 51 and 55 are connected vertically at their respective flanges 2 and 6 by means of self drilling and self taping screws. Importantly the slots 59 in the upper component 55 allow for some movement on assembly and some repositioning of the components 51 and 55 relative to each other when connecting them.

In use the lower component 1 is connected to the top of the frame prior to connection of the upper component 55 and prior to mounting the frame. The lower component 51 is connected to the frame by inserting a self drilling or self-tapping screw through the web 3.

The frame system of the invention has advantages as follows:

The framing system and frame elements of the invention provide an improved means for connecting frame elements. The connectors comprise male and female connectors having respective locking members configured for positive locking engagement. The locking members are configured so that on engagement the frame elements are held securely at the required orientation relative to each other. Furthermore by virtue of their arrangement the locking members substantially prevent any rotation of the elements relative to each other once the respective locking members are engaged. The arrangement is also very strong since the corresponding locking members are configured to engage each other through the thickness of the material of the frame elements. The locking members comprise male locking members and female lock receivers which have different profiles each being configured for a strong positive engagement with the corresponding member.

The frame elements of the invention further have the advantage that they are easy to assemble. In addition the locators are integral with the elements eliminating the need for separate components.

The base support element of the invention has further advantages as follows:
- by virtue of its structure the base support element serves to raise the top support above the screed depth and is available in different sizes for use with different screed thickness
- allows the time consuming steps of setting out and packing to level and anchoring of wall to take place before costly cranes are on site
- displaces the anchor fastening away from the edge of the slab giving a more secure and higher capacity connection - fewer anchors are needed
- connection of frame to in-situ base support element is via self drilling self tapping screws allowing rapid assembly of frames into position and maximising crane utilisation
- shape allows vertical deflection of floors to take place under live loading without straining fasteners or the support element through excessive load transfer
- may potentially be used for the passage of services eg electrical data for plumbing
- by allowing the screed to enter the element an improved seal is achieved between the elements and support structure
- the base support element has advantages for applications where acoustic performance is of importance

The upper support element has further advantages including the following:
- ease and flexibility of handling due to configuration comprising two separate components
- ease of use the components are configured for connection to the support in the order and manner required by the on-site circumstances
- setting out can be completed prior to arrival of cranes on site
- the upper support element allows for vertical connection of the components which provides for increased flexibility and ease of handling on site
- the provision of a two component upper support element in which the components are connected vertically allows for the upper component to be connected through to the lower component horizontally
- the form and manner of connection of the upper support element components allows for downward deflection of the floor without placing a structural load on the frame

## Claims

1. A framing system (10) comprising a number of frame elements (1), at least some of the frame elements (1) being configured for interconnection with adjacent frame elements (1) on assembly, a frame element (1) comprising at least one connector (3, 4) comprising a male connector (4) or a female connector (3) for interconnection with a respective female or male connector (3,4) of an adjacent like frame element (1),
the male connector (4) comprising a fixing region and a male locator, the fixing region having a hole (5) and a raised guide (6) surrounding the hole (5),
the female connector (3) comprising a fixing region and a female locator, the fixing region having a hole (9) and a recessed guide (10) surrounding the hole (9), the guide (6) of the male connector (4) of one frame element (1) being engagable with the guide (10) of the female connector (3) of another frame element (1);
whereby the male locator comprises a protuberance (7) extending from the male connector, the male connector having at least two protuberances (7);
**characterised in that** the female locators comprises a through hole (8), the female connector having at least two through holes (8); and **in that**
the male protuberances (7) define locking members and the through holes (8) define lock receivers, the protuberances (7) being configured to lock adjacent frame elements at a particular orientation relative to each other when the protuberances (7) of one frame element are engaged and locked in the corresponding through holes (8) of another frame element to substantially prevent rotation of the adjacent frame elements (1) when engaged.

2. A system as claimed in claim 1, wherein the locators (7, 8) are equispaced from the associated fixing region.

3. A system as claimed in any preceding claim wherein the male and female connectors (3, 4) each comprise four locators (7, 8) which are equispaced around the fixing region on radii extending from the fixing region (5, 9).

4. A system as claimed in any preceding claims wherein the locators (7) of the male connector (4) are formed in the frame elements by shearing or drawing through.

5. A system as claimed in any of claim 1 to 4 wherein the protuberance (7) comprises an elongate form.

6. A system as claimed in any of claims 1 to 5 wherein the protuberance (7) comprises a ridge form.

7. A system as claimed in any of claims 1 to 6 wherein the protuberance (7) comprises a substantially u-shaped cross section.

8. A system as claimed in any of claims 1 to 6 wherein the protuberance (7) comprises a substantially v-shaped cross section.

9. A system as claimed in claims 1 to 8 wherein the protuberance (7) comprises front and back lateral faces (15) defining the locking members.

10. A system as claimed in claim 9 wherein the front and back lateral faces comprise a shear edge (15).

11. A system as claimed in claims 9 to 10 wherein the lateral faces (15) protrude substantially at right angles to the frame element.

12. A system as claimed in claims 6 to 11 wherein the ridge extends in a substantially radial direction relative to the fixing region.

13. A system as claimed in claims 6 to 11 wherein the ridge extends in a generally circumferential direction relative to the fixing region.

14. A system as claimed in any of claims 1 to 13 wherein each through hole (8) comprise a generally cylindrical internal wall extending through the frame element substantially at right angles for receiving the protuberance (7).

15. A system as claimed in any preceding claim wherein the frame element (1) comprises a generally channel form comprising a base web and first and second side flanges.

16. A system as claimed in claim 15 wherein the side flanges comprise an inturned lip at the upper edge thereof to define a generally c-shaped form.

17. A system as claimed in claim 16 wherein a portion of the inturned lip is removed to define a slot for receiving a portion of an adjacent frame element.

18. A system as claimed in claim 17 wherein the frame element (1) comprises an inturned lip except at the male connector portion thereof.

19. A system as claimed in any preceding claim wherein the frame element (1) comprises a swage at a portion thereof.

20. A system as claimed in claim 19 wherein the frame element (1) comprises a swage at the female connector portion thereof.

21. A system as claimed in any preceding claim wherein the guide (6) of the male connector (4) comprises a raised guide concentric with the hole (5) in the fixing region.

22. A system as claimed in any preceding claim wherein the guide (10) of the female connector comprises a recessed guide concentric with the hole (9) in the fixing region.

23. A system as claimed in any preceding claim wherein the hole (5,9) of the fixing region comprising a fixing hole.

24. A system as claimed in any of claims 1 to 22 wherein the hole of the fixing region comprising a pilot hole for a fixing member.

25. A system as claimed in any of claims 1 to 22 wherein the hole of the fixing region comprises a clearance hole for a fixing member.

26. A frame element for a framing system as claimed in any of claims 1 to 25, the frame element having at least one connector (3, 4) comprising a male connector (4) or a female connector (3) for interconnection with a respective female or male connector (3, 4) of an adjacent like frame element, wherein
the male connector (4) comprises a fixing region and a male locator, the fixing region having a hole (5) and a raised guide (6) surrounding the hole (5);
the female connector (3) comprises a fixing region and a female locator, the fixing region having a hole (9) and a recessed guide (10) surrounding the hole (9), the guide (6) of the male connector (4) of one frame element being engagable with the guide (10) of the female connector (3) of another frame element;
**characterised in that** the male locator comprises a protuberance (7) extending from the male connector, the male connector having at least two protuberances (7);
the female locator comprising a through hole (8), the female connector having at least two through holes (8); and **in that**
the male protuberances (7) define locking members and the through holes (8) define lock receivers, the protuberances (7) being configured to lock adjacent fame elements at a particular orientation relative to each other when the protuberances (7) of one frame element are engaged and locked in the corresponding through holes (8) of another frame element to substantially prevent rotation of the adjacent frame elements when engaged.

27. A frame element as claimed in claim 26 comprising one or more male connectors (4).

28. A frame element as claimed in claim 26 comprising one or more female connectors (3).

29. A frame element as claimed in claim 26 comprising at least one male (4) and at least one female connector (3).

30. A building system comprising a framing system as claimed in any of claims 1 to 24 and a base support element (30, 40) for mounting a frame (25) to an underlying support structure, the base support element (30, 40) comprising an upper support (33), and legs (32, 34) depending from the support (33), **characterised in that** the base support element (30, 40) comprises an integral fixing member (35) extending outwardly from one of the legs (34) for fixing the support element (30, 40) to a support structure, and an integral stabilising member (31) extending inwardly from one of the legs (32).

31. A building system as claimed in claim 30 wherein the fixing member (35) is configured to enable the insertion of fixing pins therethrough to anchor the element (30.40) to the support structure.

32. A building system as claimed in claim 31 wherein the fixing member (35) comprises a plurality of preformed fixing holes (36) to receive fixing pins.

33. A building system as claimed in claims 30 to 32 wherein the fixing member (35) is continuous.

34. A building system as claimed in any of claims 30 to 33 wherein the fixing member (35) is arranged substantially at right angles to the leg (34).

35. A building system as claimed in claims 30 to 34 wherein the support (30, 40) defines a receiver configured to receive and support a structural member.

36. A building system as claimed in claims 30 to 34 wherein the legs (32, 34) are configured to space the support apart from the support structure.

37. A building system as claimed in claims 30 to 36 wherein one of the legs (34) comprises a plurality of spaced-apart screed entry holes (37).

38. A building system as claimed in claim 37 wherein the screed entry holes (37) comprise through holes.

39. A building system as claimed in claims 37 or 38 wherein the screed entry holes (37) comprise a semicircular form.

40. A building system as claimed in any of claims 30 to 39 wherein the stabilising member (31) is arranged substantially at right angles to the leg (32).

41. A building system as claimed in any of claims 30 to 40 wherein the stabilising member (31) extends between the two legs (32, 34).

42. A building system as claimed in any of claims 30 to 41 wherein the stabilising member (31) is configured to stabilise the support element.

43. A building system as claimed in any of claims 30 to 42 wherein the stabilising member (31) is continuous.

44. A building system comprising a framing system as claimed in any of claims 1 to 25 and a support assembly (50) for connecting a frame (25) to an upper support structure (26), the support assembly comprising an upper connector (55) and a lower connector (51).
the upper and lower connectors having a substantially L-shaped form and comprising a web (53, 57) and a flange (52, 56),
the web (57) of the upper connector (55) being configured for connection to a support structure,
the web (53) of the lower connector (51) being configured for connection to a structural member, and
the flanges (56, 52) of the upper and lower connectors (51, 55) being configured for connection to each other, **characterised in that** the flange (56) of the upper connector (55) comprises a plurality of spaced-apart slots (59) which are vertically oriented.

45. A building system as claimed in claim 44 wherein the web (57) of the upper connector (55) comprises a plurality of fixing holes (58) spaced apart to enable connection to a support structure.

46. A building system as claimed in claim 44 or 45 wherein the slots (59) are configured to enable deflection of a support structure without placing a load on a structural member.

47. A building system as claimed in any of claims 44 to 46 wherein the webs of the upper and lower connectors are continuous.

48. A building system as claimed in any of claims 44 to 47 wherein the flanges of the upper and lower connectors are continuous.

49. A modular building system comprising a framing system as claimed in any of claims 1 to 25.

50. A modular building system comprising a building system as claimed in any of claims 30 to 48.

51. A modular building system as claimed in claim 49 or 50 comprising mounting means for mounting the framing system to form a partition wall and wherein the mounting means comprises a support element as defined in any of claims 30 to 36 for mounting to an underlying support structure and a support element as defined in any of claims 44 to 48 for mounting to an upper support structure.

## Patentansprüche

1. Rahmensystem (10), das eine Anzahl von Rahmenelementen (1) aufweist, wobei wenigstens einige der Rahmenelemente (1) zur Verbindung mit benachbarten Rahmenelementen (1) beim Zusammenbau konfiguriert sind, wobei ein Rahmenelement (1) wenigstens einen Verbinder (3, 4) aufweist, der einen Steckverbinder (4) oder einen Buchsenverbinder (3) zur Verbindung mit einem jeweiligen Buchsen- oder Steckverbinder (3, 4) eines benachbarten gleichen Rahmenelements (1) aufweist,
wobei der Steckverbinder (4) einen Befestigungsbereich und ein Stecker-Positionierelement aufweist, und der Befestigungsbereich ein Loch (5) und eine das Loch (5) umschließende erhöhte Führung (6) enthält,
wobei der Buchsenverbinder (3) einen Befestigungsbereich und ein Buchsen-Positionierelement aufweist, und der Befestigungsbereich ein Loch (9) und eine das Loch (9) umschließende ausgesparte Führung (10) enthält, wobei die Führung (6) des Steckverbinders (4) eines Rahmenelements (1) mit der Führung (10) des Buchsenverbinders (3) eines anderen Rahmenelements (1) in Eingriff gebracht werden kann;
wodurch das Stecker-Positionierelement einen Vorsprung (7) aufweist, der sich von dem Steckverbinder erstreckt, und der Steckverbinder wenigstens zwei Vorsprünge (7) aufweist;
**dadurch gekennzeichnet, dass** das Buchsen-Positionierelement ein Durchgangsloch (8) aufweist, wobei der Buchsenverbinder wenigstens zwei Durchgangslöcher (8) enthält; und dass
die Steckvorsprünge (7) Verriegelungselemente definieren und die Durchgangslöcher (8) Verriegelungsaufnahmen definieren, wobei die Vorsprünge (7) konfiguriert sind, um benachbarte Rahmenelemente in einer bestimmten Ausrichtung in Bezug zueinander zu verriegeln, wenn die Vorsprünge (7) eines Rahmenelements ineinandergreifen und in den entsprechenden Durchgangslöchern (8) eines anderen Rahmenelements verriegelt sind, um im Wesentlichen Rotation der benachbarten Rahmenelemente (1) zu verhindern, wenn diese in Eingriff stehen.

2. System nach Anspruch 1, bei dem die Positionierelemente (7, 8) in gleichem Abstand von dem zugehörigen Befestigungsbereich angeordnet sind.

3. System nach einem vorhergehenden Anspruch, bei dem die Steck- und Buchsenverbinder (3, 4) jeweils vier Positionierelemente (7, 8) aufweisen, die in gleichem Abstand um den Befestigungsbereich herum auf Radien angeordnet sind, die sich von dem Befestigungsbereich (5, 9) erstrecken.

4. System nach einem vorhergehenden Anspruch, bei dem die Positionierelemente (7) des Steckverbinders (4) in den Rahmenelementen durch Abscheren oder Durchziehen ausgebildet werden.

5. System nach einem der Ansprüche 1 bis 4, bei dem der Vorsprung (7) eine längliche Form hat.

6. System nach einem der Ansprüche 1 bis 5, bei dem der Vorsprung (7) eine Rippenform hat.

7. System nach einem der Ansprüche 1 bis 6, bei dem der Vorsprung (7) einen im Wesentlichen U-förmigen Querschnitt hat.

8. System nach einem der Ansprüche 1 bis 6, bei dem der Vorsprung (7) einen im Wesentlichen V-förmigen Querschnitt hat.

9. System nach den Ansprüchen 1 bis 8, bei dem der Vorsprung (7) vordere und hintere Seitenflächen (15) aufweist, die die Verriegelungselemente definieren.

10. System nach Anspruch 9, bei dem die vorderen und hinteren Seitenflächen eine Scherkante (15) aufweisen.

11. System nach den Ansprüchen 9 bis 10, bei dem die Seitenflächen (15) im Wesentlichen in rechten Winkeln zu dem Rahmenelement vorstehen.

12. System nach den Ansprüchen 6 bis 11, bei dem sich die Rippe in einer im Wesentlichen radialen Richtung in Bezug zu dem Befestigungsbereich erstreckt.

13. System nach den Ansprüchen 6 bis 11, bei dem sich die Rippe in einer allgemeinen Umfangsrichtung in Bezug zu dem Befestigungsbereich erstreckt.

14. System nach einem der Ansprüche 1 bis 13, bei dem jedes Durchgangsloch (8) eine allgemein zylindrische Innenwand aufweist, die sich durch das Rahmenelement im Wesentlichen in rechten Winkeln zum Aufnehmen des Vorsprungs (7) erstreckt.

15. System nach einem vorhergehenden Anspruch, bei dem das Rahmenelement (1) eine allgemeine Kanalform aufweist, die einen Bodensteg und einen ersten und zweiten Seitenflansch aufweist.

16. System nach Anspruch 15, bei dem die Seitenflansche eine nach innen gedrehte Lippe an ihrer Oberkante aufweisen, um eine allgemein C-förmige Form zu definieren.

17. System nach Anspruch 16, bei dem ein Teil der nach innen gedrehten Lippe entfernt ist, um einen Schlitz zum Aufnehmen eines Teils eines benachbarten Rahmenelements zu definieren.

18. System nach Anspruch 17, bei dem das Rahmenelement (1) eine nach innen gedrehte Lippe außer an dem Steckverbinderteil desselben aufweist.

19. System nach einem vorhergehenden Anspruch, bei dem das Rahmenelement (1) ein Gesenk an einem Teil desselben aufweist.

20. System nach Anspruch 19, bei dem das Rahmenelement (1) ein Gesenk an dem Buchsenverbinderteil desselben aufweist.

21. System nach einem vorhergehenden Anspruch, bei dem die Führung (6) des Steckverbinders (4) eine erhöhte Führung aufweist, die konzentrisch mit dem Loch in dem Befestigungsbereich ist.

22. System nach einem vorhergehenden Anspruch, bei dem die Führung (10) des Buchsenverbinders eine ausgesparte Führung aufweist, die konzentrisch mit dem Loch (9) im Befestigungsbereich ist.

23. System nach einem vorhergehenden Anspruch, bei dem das Loch (5, 9) des Befestigungsbereichs ein Befestigungsloch aufweist.

24. System nach einem der Ansprüche 1 bis 22, bei dem das Loch des Befestigungsbereichs ein Pilotloch für ein Befestigungselement aufweist.

25. System nach einem der Ansprüche 1 bis 22, bei dem das Loch des Befestigungsbereichs ein Durchgangsloch für ein Befestigungselement aufweist.

26. Rahmenelement für ein Rahmensystem nach einem der Ansprüche 1 bis 25, wobei das Rahmenelement wenigstens einen Verbinder (3, 4) aufweist, der einen Steckverbinder (4) oder einen Buchsenverbinder (3) zur Verbindung mit einem jeweiligen Buchsen- oder Steckverbinder (3, 4) eines benachbarten gleichen Rahmenelements aufweist,
wobei der Steckverbinder (4) einen Befestigungsbereich und ein Stecker-Positionierelement aufweist, und der Befestigungsbereich ein Loch (5) und eine das Loch (5) umschließende erhöhte Führung (6) enthält,
wobei der Buchsenverbinder (3) einen Befestigungsbereich und ein Buchsen-Positionierelement aufweist, und der Befestigungsbereich ein Loch (9) und eine das Loch (9) umschließende ausgesparte Führung (10) enthält, wobei die Führung (6) des Steckverbinders (4) eines Rahmenelements mit der Führung (10) des Buchsenverbinders (3) eines anderen Rahmenelements in Eingriff gebracht werden kann;
**dadurch gekennzeichnet, dass** das Stecker-Positionierelement einen Vorsprung (7) aufweist, der sich von dem Steckverbinder erstreckt, und der Steckverbinder wenigstens zwei Vorsprünge (7) aufweist;
wobei das Buchsen-Positionierelement ein Durchgangsloch (8) aufweist, und der Buchsenverbinder wenigstens zwei Durchgangslöcher (8) aufweist, und dass
die Steckvorsprünge (7) Verriegelungselemente definieren und die Durchgangslöcher (8) Verriegelungsaufnahmen definieren, wobei die Vorsprünge (7) konfiguriert sind, um benachbarte Rahmenelemente in einer bestimmten Ausrichtung in Bezug zueinander zu verriegeln, wenn die Vorsprünge (7) eines Rahmenelements ineinandergreifen und in den entsprechenden Durchgangslöchern (8) eines anderen Rahmenelements verriegelt sind, um im Wesentlichen Rotation der benachbarten Rahmenelemente zu verhindern, wenn diese in Eingriff stehen.

27. Rahmenelement nach Anspruch 26, das einen oder mehrere Steckverbinder (4) aufweist.

28. Rahmenelement nach Anspruch 26, das einen oder mehrere Buchsenverbinder (3) aufweist.

29. Rahmenelement nach Anspruch 26, das mindestens einen Steck- (4) und mindestens einen Buchsenverbinder (3) aufweist.

30. Bausystem, das ein Rahmensystem nach einem der Ansprüche 1 bis 24 und ein Bodenabstützelement (30, 40) zum Anbringen eines Rahmens (25) an einer darunter liegenden Abstützstruktur aufweist, wobei das Bodenabstützelement (30, 40) eine obere Abstützung (33) und Füße (32, 34) aufweist, die von der Abstützung (33) herabhängen, **dadurch gekennzeichnet, dass** das Bodenabstützelement (30, 40) ein integriertes Befestigungselement (35), das sich nach außen von einem der Füße (34) zum Befestigen des Abstützelements (30, 40) an einer Abstützstruktur erstreckt, und ein integriertes Stabilisierelement (31) aufweist, das sich von einem der Füße (32) nach innen erstreckt.

31. Bausystem nach Anspruch 30, bei dem das Befestigungselement (35) konfiguriert ist, um die Einführung von Befestigungsstiften durch dasselbe zu ermöglichen, um das Element (30, 40) an der Abstützstruktur zu verankern.

32. Bausystem nach Anspruch 31, bei dem das Befestigungselement (35) eine Anzahl vorgeformter Befestigungslöcher (36) zum Aufnehmen von Befestigungsstiften aufweist.

33. Bausystem nach den Ansprüchen 30 bis 32, bei dem das Befestigungselement (35) durchgehend ist.

34. Bausystem nach einem der Ansprüche 30 bis 33, bei dem das Befestigungselement (35) im Wesentlichen in rechten Winkeln zu dem Fuß (34) angeordnet ist.

35. Bausystem nach den Ansprüchen 30 bis 34, bei dem die Abstützung (30, 40) eine Aufnahme definiert, die zum Aufnehmen und Abstützen eines Strukturelements konfiguriert ist.

36. Bausystem nach den Ansprüchen 30 bis 34, bei dem die Füße (32, 34) konfiguriert sind, um die Abstützung von der Abstützstruktur zu beabstanden.

37. Bausystem nach den Ansprüchen 30 bis 36, bei dem einer der Füße (34) eine Anzahl beabstandeter Estricheinfülllöcher (37) aufweist.

38. Bausystem nach Anspruch 37, bei dem die Estricheinfülllöcher (37) Durchgangslöcher aufweisen.

39. Bausystem nach den Ansprüchen 37 oder 38, bei dem die Estricheinfülllöcher (37) eine Halbkreisform aufweisen.

40. Bausystem nach einem der Ansprüche 30 bis 39, bei dem das Stabilisierelement (31) im Wesentlichen in rechten Winkeln zu dem Fuß (32) angeordnet ist.

41. Bausystem nach einem der Ansprüche 30 bis 40, bei dem sich das Stabilisierelement (31) zwischen den beiden Füßen (32, 34) erstreckt.

42. Bausystem nach einem der Ansprüche 30 bis 41, bei dem das Stabilisierelement (31) konfiguriert ist, um das Abstützelement zu stabilisieren.

43. Bausystem nach einem der Ansprüche 30 bis 42, bei dem das Stabilisierelement (31) durchgehend ist.

44. Bausystem, das ein Rahmensystem nach einem der Ansprüche 1 bis 25 und eine Abstützbaugruppe (50) zum Verbinden eines Rahmens (25) mit einer oberen Abstützstruktur (26) aufweist, wobei die Abstützbaugruppe einen oberen Verbinder (55) und einen unteren Verbinder (51) aufweist,
wobei der untere und obere Verbinder eine im Wesentlichen L-förmige Form haben und einen Steg (53, 57) sowie einen Flansch (52, 56) aufweisen,
wobei der Steg (57) des oberen Verbinders (55) zur Verbindung mit einer Abstützstruktur konfiguriert ist,
wobei der Steg (53) des unteren Verbinders (51) zur Verbindung mit einem Strukturelement konfiguriert ist, und
die Flansche (56, 52) der oberen und unteren Verbinder (51, 55) zur Verbindung miteinander konfiguriert sind, **dadurch gekennzeichnet, dass** der Flansch (56) des oberen Verbinders (55) eine Mehrzahl voneinander beabstandeter Schlitze (59) aufweist, die vertikal ausgerichtet sind.

45. Bausystem nach Anspruch 44, bei dem der Steg (57) des oberen Verbinders (55) eine Mehrzahl voneinander beabstandeter Befestigungslöcher (58) aufweist, um Verbindung mit einer Abstützstruktur zu ermöglichen.

46. Bausystem nach Anspruch 44 oder 45, bei dem die Schlitze (59) konfiguriert sind, um Durchbiegung einer Abstützstruktur zu ermöglichen, ohne eine Last auf ein Strukturelement zu legen.

47. Bausystem nach einem der Ansprüche 44 bis 46, bei dem die Stege der oberen und unteren Verbinder durchgehend sind.

48. Bausystem nach einem der Ansprüche 44 bis 47, bei dem die Flansche der oberen und unteren Verbinder durchgehend sind.

49. Modulbausystem, das ein Rahmensystem nach einem der Ansprüche 1 bis 25 aufweist.

50. Modulbausystem, das ein Bausystem nach einem der Ansprüche 30 bis 48 aufweist.

51. Modulbausystem nach Anspruch 49 oder 50, das Anbringungsmittel zum Anbringen des Rahmensystems aufweist, um eine Trennwand zu bilden, und bei dem das Anbringungsmittel ein Abstützelement nach einem der Ansprüche 30 bis 36 zum Anbringen an einer darunter liegenden Abstützstruktur und ein Abstützelement nach einem der Ansprüche 44 bis 48 zum Anbringen an einer oberen Abstützstruktur aufweist.

## Revendications

1. Système de structure (10) comportant un nombre d'éléments structuraux (1), au moins quelques-uns des éléments structuraux (1) étant configurés à des fins d'interconnexion avec des éléments structuraux adjacents (1) lors de l'assemblage, un élément structural (1) comportant au moins un connecteur (3, 4) comportant un connecteur mâle (4) ou un connecteur femelle (3) à des fins d'interconnexion avec un connecteur de type femelle ou de type mâle respectif (3, 4) d'un élément structural identique adjacent (1),
le connecteur mâle (4) comportant une région de fixation et un dispositif de repérage mâle, la région de fixation ayant un trou (5) et une partie de guidage surélevée (6) entourant le trou (5),
le connecteur femelle (3) comportant une région de fixation et un dispositif de repérage femelle, la région de fixation ayant un trou (9) et une partie de guidage évidée (10) entourant le trou (9), la partie de guidage (6) du connecteur mâle (4) d'un élément structural (1) étant en mesure d'être mise en prise avec la partie de guidage (10) du connecteur femelle (3) d'un autre élément structural (1) ;
ce par quoi le dispositif de repérage mâle comporte une protubérance (7) s'étendant depuis le connecteur mâle, le connecteur mâle ayant au moins deux protubérances (7) ;
**caractérisé en ce que** le dispositif de repérage femelle comporte un trou traversant (8), le connecteur femelle ayant au moins deux trous traversants (8) ; et **en ce que**
les protubérances mâles (7) définissent des éléments de verrouillage et les trous traversants (8) définissent des dispositifs de réception de verrouillage, les protubérances (7) étant configurées pour verrouiller des éléments structuraux adjacents selon une orientation particulière les uns par rapport aux autres quand les protubérances (7) d'un élément structural sont mises en prise et verrouillées dans les trous traversants correspondants (8) d'un autre élément structural pour essentiellement empêcher la rotation des éléments structuraux adjacents (1) quand ils sont mis en prise.

2. Système selon la revendication 1, dans lequel les dispositifs de repérage (7, 8) sont espacés de manière équidistante par rapport à la région de fixation s'y rapportant.

3. Système selon l'une quelconque des revendications précédentes, dans lequel les connecteurs de type mâle et de type femelle (3, 4) comportent chacun quatre dispositifs de repérage (7, 8) qui sont espacés de manière équidistante autour de la région de fixation sur des rayons s'étendant depuis la région de fixation (5, 9).

4. Système selon l'une quelconque des revendications précédentes, dans lequel les dispositifs de repérage (7) du connecteur mâle (4) sont formés dans les éléments structuraux par cisaillement ou emboutissage au travers de ceux-ci.

5. Système selon l'une quelconque des revendications 1 à 4, dans lequel la protubérance (7) comporte une forme allongée.

6. Système selon l'une quelconque des revendications 1 à 5, dans lequel la protubérance (7) comporte une forme de strie.

7. Système selon l'une quelconque des revendications 1 à 6, dans lequel la protubérance (7) comporte une section transversale essentiellement en U.

8. Système selon l'une quelconque des revendications 1 à 6, dans lequel la protubérance (7) comporte une section transversale essentiellement en V.

9. Système selon les revendications 1 à 8, dans lequel la protubérance (7) comporte des faces latérales avant et arrière (15) définissant les éléments de verrouillage.

10. Système selon la revendication 9, dans lequel les faces latérales avant et arrière comportent un bord de cisaillement (15).

11. Système selon les revendications 9 à 10, dans lequel les faces latérales (15) font saillie de manière essentiellement perpendiculaire par rapport à l'élément structural.

12. Système selon les revendications 6 à 11, dans lequel la strie s'étend dans une direction essentiellement radiale par rapport à la région de fixation.

13. Système selon les revendications 6 à 11, dans lequel la strie s'étend dans une direction généralement circonférentielle par rapport à la région de fixation.

14. Système selon l'une quelconque des revendications 1 à 13, dans lequel chaque trou traversant (8) comporte une paroi interne généralement cylindrique s'étendant au travers de l'élément structural de manière essentiellement perpendiculaire à des fins de réception de la protubérance (7).

15. Système selon l'une quelconque des revendications précédentes, dans lequel l'élément structural (1) comporte une forme généralement de type profilé en U comportant une âme de base et une première et une seconde semelles latérales.

16. Système selon la revendication 15, dans lequel les semelles latérales comportent une lèvre tournée en dedans au niveau du bord supérieur de celle-ci pour définir une forme généralement en C.

17. Système selon la revendication 16, dans lequel une partie de la lèvre tournée en dedans est retirée pour définir une fente à des fins de réception d'une partie d'un élément structural adjacent.

18. Système selon la revendication 17, dans lequel l'élément structural (1) comporte une lèvre tournée en dedans sauf au niveau de la partie connecteur mâle de celui-ci.

19. Système selon l'une quelconque des revendications précédentes, dans lequel l'élément structural (1) comporte un marquage en creux au niveau d'une partie de celui-ci.

20. Système selon la revendication 19, dans lequel l'élément structural (1) comporte un marquage en creux au niveau de la partie connecteur femelle de celui-ci.

21. Système selon l'une quelconque des revendications précédentes, dans lequel la partie de guidage (6) du connecteur mâle (4) comporte une partie de guidage surélevée concentrique par rapport au trou (5) dans la région de fixation.

22. Système selon l'une quelconque des revendications précédentes, dans lequel la partie de guidage (10) du connecteur femelle comporte une partie de guidage évidée concentrique par rapport au trou (9) dans la région de fixation.

23. Système selon l'une quelconque des revendications précédentes, dans lequel le trou (5, 9) de la région de fixation comporte un trou de fixation.

24. Système selon l'une quelconque des revendications 1 à 22, dans lequel le trou de la région de fixation comporte un avant-trou pour un élément de fixation.

25. Système selon l'une quelconque des revendications 1 à 22, dans lequel le trou de la région de fixation comporte un trou de dégagement pour un élément de fixation.

26. Élément structural pour un système de structure selon l'une quelconque des revendications 1 à 25, l'élément structural ayant au moins un connecteur (3, 4) comportant un connecteur mâle (4) ou un connecteur femelle (3) à des fins d'interconnexion avec un connecteur de type femelle ou de type mâle respectif (3, 4) d'un élément structural identique adjacent, dans lequel
le connecteur mâle (4) comporte une région de fixation et un dispositif de repérage mâle, la région de fixation ayant un trou (5) et une partie de guidage surélevée (6) entourant le trou (5) ;
le connecteur femelle (3) comporte une région de fixation et un dispositif de repérage femelle, la région de fixation ayant un trou (9) et une partie de guidage évidée (10) entourant le trou (9), la partie de guidage (6) du connecteur mâle (4) d'un élément structural étant en mesure d'être mise en prise avec la partie de guidage (10) du connecteur femelle (3) d'un autre élément structural ;
**caractérisé en ce que** le dispositif de repérage mâle comporte une protubérance (7) s'étendant depuis le connecteur mâle, le connecteur mâle ayant au moins deux protubérances (7) ;
le dispositif de repérage femelle comportant un trou traversant (8), le connecteur femelle ayant au moins deux trous traversants (8) ; et **en ce que** les protubérances mâles (7) définissent des éléments de verrouillage et les trous traversants (8) définissent des dispositifs de réception de verrouillage, les protubérances (7) étant configurées pour verrouiller des éléments structuraux adjacents selon une orientation particulière les uns par rapport aux autres quand les protubérances (7) d'un élément structural sont mises en prise et verrouillées dans les trous traversants correspondants (8) d'un autre élément structural pour essentiellement empêcher la rotation des éléments structuraux adjacents quand ils sont mis en prise.

27. Élément structural selon la revendication 26, comportant un ou plusieurs connecteurs mâles (4).

28. Élément structural selon la revendication 26, comportant un ou plusieurs connecteurs femelles (3).

29. Élément structural selon la revendication 26, comportant au moins un connecteur mâle (4) et au moins un connecteur femelle (3).

30. Système de construction comportant un système de structure selon l'une quelconque des revendications 1 à 24 et un élément de support de base (30, 40) à des fins de montage d'une structure (25) sur une structure de support sous-jacente, l'élément de support de base (30, 40) comportant un support supérieur (33), et des montants (32, 34) qui sont dépendants du support (33), **caractérisé en ce que** l'élément de support de base (30, 40) comporte un élément de fixation intégral (35) s'étendant vers l'extérieur depuis l'un des montants (34) à des fins de fixation de l'élément de support (30, 40) sur une structure de support, et un élément stabilisateur intégré (31) s'étendant vers l'intérieur depuis l'un des montants (32).

31. Système de construction selon la revendication 30, dans lequel l'élément de fixation (35) est configuré pour permettre l'insertion de goupilles de fixation au travers de celui-ci à des fins d'ancrage de l'élément (30, 40) sur la structure de support.

32. Système de construction selon la revendication 31, dans lequel l'élément de fixation (35) comporte une pluralité de trous de fixation préformés (36) à des fins de réception de goupilles de fixation.

33. Système de construction selon les revendications 30 à 32, dans lequel l'élément de fixation (35) est continu.

34. Système de construction selon l'une quelconque des revendications 30 à 33, dans lequel l'élément de fixation (35) est arrangé de manière essentiellement perpendiculaire par rapport au montant (34).

35. Système de construction selon les revendications 30 à 34, dans lequel le support (30, 40) définit un dispositif de réception configuré à des fins de réception et de support d'un élément structural.

36. Système de construction selon les revendications 30 à 34, dans lequel les montants (32, 34) sont configurés pour espacer le support par rapport à la structure de support.

37. Système de construction selon les revendications 30 à 36, dans lequel l'un des montants (34) comporte une pluralité de trous d'entrée de chape (37) espacés les uns des autres.

38. Système de construction selon la revendication 37, dans lequel les trous d'entrée de chape (37) comportent des trous traversants.

39. Système de construction selon la revendication 37 ou la revendication 38, dans lequel les trous d'entrée de chape (37) comportent une forme semi-circulaire.

40. Système de construction selon l'une quelconque des revendications 30 à 39, dans lequel l'élément stabilisateur (31) est arrangé de manière essentiellement perpendiculaire par rapport au montant (32).

41. Système de construction selon l'une quelconque des revendications 30 à 40, dans lequel l'élément stabilisateur (31) s'étend entre les deux montants (32, 34).

42. Système de construction selon l'une quelconque des revendications 30 à 41, dans lequel l'élément stabilisateur (31) est configuré à des fins de stabilisation de l'élément de support.

43. Système de construction selon l'une quelconque des revendications 30 à 42, dans lequel l'élément stabilisateur (31) est continu.

44. Système de construction comportant un système de structure selon l'une quelconque des revendications 1 à 25 et un ensemble de support (50) à des fins de connexion d'une structure (25) sur une structure de support supérieure (26), l'ensemble de support comportant un connecteur supérieur (55) et un connecteur inférieur (51),
les connecteurs de type supérieur et de type inférieur ayant une forme essentiellement en L et comportant une âme (53, 57) et une semelle (52, 56), l'âme (57) du connecteur supérieur (55) étant configurée à des fins de connexion sur une structure de support,
l'âme (53) du connecteur inférieur (51) étant configurée à des fins de connexion sur un élément de structure, et
les semelles (56, 52) des connecteurs de type supérieur et de type inférieur (51, 55) étant configurées à des fins de connexion l'une par rapport à l'autre, **caractérisé en ce que** la semelle (56) du connecteur supérieur (55) comporte une pluralité de fentes espacées les unes des autres (59) qui sont orientées à la verticale.

45. Système de construction selon la revendication 44, dans lequel l'âme (57) du connecteur supérieur (55) comporte une pluralité de trous de fixation (58) espacés les uns des autres pour permettre une connexion sur une structure de support.

46. Système de construction selon la revendication 44 ou la revendication 45, dans lequel les fentes (59) sont configurées pour permettre un fléchissement d'une structure de support sans placer une charge sur un élément de structure.

47. Système de construction selon l'une quelconque des revendications 44 à 46, dans lequel les âmes des connecteurs de type supérieur et de type inférieur sont continues.

48. Système de construction selon l'une quelconque des revendications 44 à 47, dans lequel les semelles des connecteurs de type supérieur et de type inférieur sont continues.

49. Système de construction modulaire comportant un système de structure selon l'une quelconque des revendications 1 à 25.

50. Système de construction modulaire comportant un système de construction selon l'une quelconque des revendications 30 à 48.

51. Système de construction modulaire selon la revendication 49 ou la revendication 50, comportant un moyen de montage à des fins de montage du système de structure pour former une cloison et dans lequel le moyen de montage comporte un élément de support tel qu'il est défini selon l'une quelconque des revendications 30 à 36 à des fins de montage sur une structure de support sous-jacente et un élément de support tel qu'il est défini selon l'une quelconque des revendications 44 à 48 à des fins de montage sur une structure de support supérieure.
